(19) **Europäisches Patentamt / European Patent Office / Office européen des brevets**

(11) **EP 2 273 448 A1**

(12) **EUROPEAN PATENT APPLICATION**

(43) Date of publication:
**12.01.2011 Bulletin 2011/02**

(51) Int Cl.:
***G06Q 50/00*** *(2006.01)*

(21) Application number: **10160756.2**

(22) Date of filing: **22.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **24.06.2009 JP 2009149364**

(71) Applicant: **Hitachi, Ltd.**
**Chiyoda-ku**
**Tokyo 100-8280 (JP)**

(72) Inventors:
• **Adachi, Tetsuro**
**Tokyo 100-8220 (JP)**
• **Taguchi, Kentaro**
**Tokyo 100-8220 (JP)**
• **Naganuma, Manabu**
**Tokyo 100-8220 (JP)**

(74) Representative: **Kirschner, Klaus Dieter**
**Puschmann Borchert Bardehle**
**Patentanwälte Partnerschaft**
**Bajuwarenring 21**
**D-82041 Oberhaching (DE)**

(54) **Apparatus and method for supporting cause analysis**

(57) Conventionally, there is a technique to conduct a cause analysis in which a single evaluation axis, such as a performance time, is used to configure a problem point network. However, in particular, in a system to visualize a management problem in which problems are intricately-intertwined with one another, information on multiple evaluation axes, collected from a business system, are utilized, and units are different for respective evaluation axes. Therefore, it is difficult to simply specify a cause of problem occurrence. In view of this situation, an object of the present invention is to extract and present a factor which has a significant influence on the problem occurrence. The present invention is directed to an apparatus which stores causal relation information specifying the causal relation and the relation level between the indexes, business goal achievement level information, and an influence level of the causal relation, calculates the influence level by using the business goal achievement level information and the relation level of the causal relation, specifies as the causal index the index having a large influence, and generates screen information for displaying a graph and/or table relating to the causal index.

FIG.1

**Description**

The present invention relates to a technique which supports cause analysis.

Conventionally, there has been a technique which accepts an input of relationship between cause and effect of a problem that occurs regarding one business operation, uses an estimation axis such as hours required for conducting the operation, puts weights on each of causal works and the like, thereby setting up a problem network to perform cause analysis. Japanese Unexamined Patent Application Publication No. 2003-345865 (hereinafter, referred to as "patent document 1") discloses a technique which relates to such business analysis as described above.

An enterprise system such as BI (Business Intelligence) system which aims at visualizing a problem in management, uses various information items according to more than one estimation axes, and those information items are collected from an ERP (Enterprise Resource Planning) and/or all sorts of business systems.

In many cases, problems of management induced by the multiple estimation axes, which exist in parallel and intricately-intertwined with one another, have different units for qualification with respect to each of the estimation axes which possibly cause the problem. Therefore, it is difficult to identify a cause by simply making a comparison among the possibly causal estimation axes. Therefore, the source of the problem is not easily identified in an appropriate manner, just by applying the technique described in the patent document 1 as discussed above.

An object of the present invention is to provide a technique, which enables identification and presentation of a factor when a problem occurs, the factor having a significant influence on the occurrence of the problem.

In order to address the issue as discussed above, a cause analysis technique relating to the present invention provides an art which presents an index having a large effect on a problematic index, on the basis of a relation level and an achievement level between the indexes having cause-and-effect relationship (or causal relation).

By way of example, an apparatus for supporting cause analysis includes, a storage unit for storing causal relation information which specifies a causal relation indicating relevance between cause and effect among multiple indexes and a relation level of the causal relation, business goal achievement level information which specifies a business goal achievement level, and causal influence level information for specifying an influence level among the indexes, a communication unit for acquiring from a second apparatus via a network, graph configuration information relating to the indexes, and a cause analyzer for calculating the influence level by multiplying a second influence level of an effect side index of an influence-level calculation target index, a business goal not-achieved level obtained by subtracting the business goal achievement level from a business goal of the influence-level calculation target index, and the relation level between the effect side index of the influence-level calculation target index and the influence-level calculation target index, specifying as a causal index, an index which has the largest influence level among indexes on the cause side of the causal relation, acquiring via the communication unit a graph relating to the causal index being specified, and generating screen information for displaying the graph.

When a problem occurs, it is possible to provide a technique which enables extraction and presentation of a factor, which has a significant influence on the occurrence of the problem.

Embodiments of the invention are described with reference to the drawings.

FIG. 1 illustrates a configuration of a client terminal and a cause analysis support server;
FIG. 2 illustrates a hardware configuration of the client terminal;
FIG. 3A and FIG. 3B illustrate an example of a causal relation table;
FIG. 4 illustrates an example of a business goal achievement level table;
FIG. 5 illustrates an example of an influence level table;
FIG. 6 illustrates a process flow of a cause analysis processing;
FIG. 7 illustrates an example of a cause analysis screen;
FIG. 8 illustrates an example of a relation level input support screen;
FIG. 9A and FIG. 9B illustrate an example of a target value input screen;
FIG. 10A and FIG. 10B illustrate an example of screens for displaying information relating to a cause;
FIG. 11 illustrates a specific example of the achievement level relating to the cause analysis processing;
FIG. 12 illustrates a specific example of the influence level relating to the cause analysis processing;
FIG. 13 illustrates a specific example of a relative value of the influence level relating to the cause analysis processing;
FIG. 14 illustrates a specific example of a rank of the influence level relating to the cause analysis processing;
FIG. 15 illustrates a specific example of the rank of the influence level relating to the cause analysis processing;
FIG. 16 illustrates a modification example relating to the relation level input support screen; and
FIG. 17A, FIG. 17B, and FIG. 17C illustrate an example of the screen displays relating to the relation level input support.

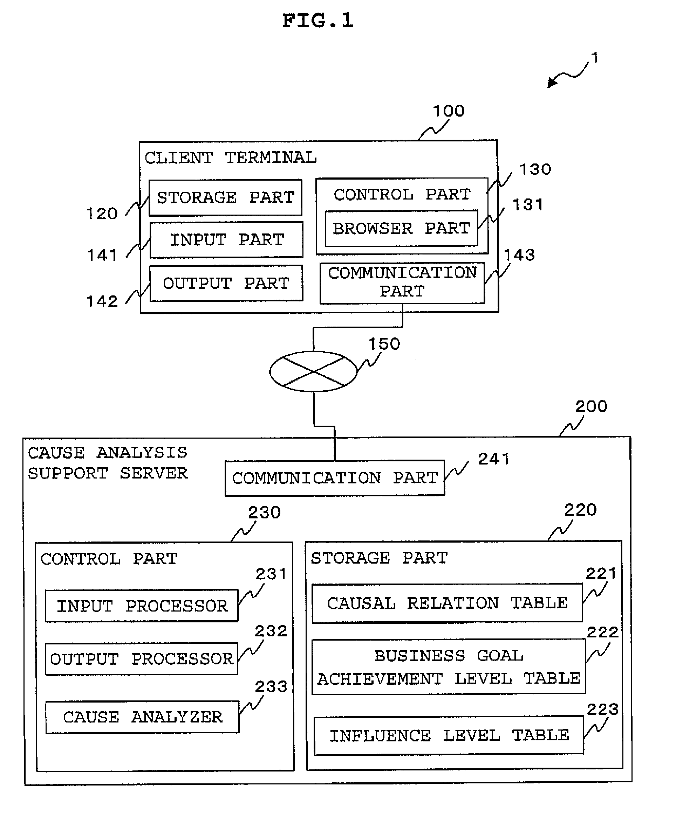

FIG. 1 illustrates a cause analysis support system 1 relating to an embodiment of the present invention.

The cause analysis support system 1 according to the present invention incorporates a client terminal 100 and a cause analysis support server 200, and communication is established via a network 150 between the client terminal 100 and the cause analysis support server 200.

The network 150 is typically a communication network such as a LAN (Local Area Network), which is managed by an organization to which a user belongs. However, it is to be noted that this is not the only example of the network 150, and it may be a public communication network such as the Internet, and a communication network which partially uses a general public line, such as a WAN (Wide Area Network) and VPN (Virtual Private Network).

The client terminal 100 accepts from the user an operation input (an operation relating to a cause analysis), requests the cause analysis support server 200 via the network 150 to perform processing, and receives the information regarding a result of the processing from the cause analysis support server 200 and presents the result to the user.

As shown in FIG. 1, the client terminal 100 includes a storage part 120, a control part 130, an input part 141, an output part 142, and a communication part 143.

The storage part 120 stores various electronic information items.

The control part 130 is provided with a browser part 131. The browser part 131 is connected to the network 150 via the communication part 143 described in the following, and establishes communication with a second apparatus connected to the network 150. In addition, the browser part 131 accepts an operation input from the user via the input part 141, and requests the output part 142 to output the information to be presented to the user. By way of example, upon receipt of a Web page or the like, having a qualified display information such as an HTML (Hyper Text Markup Language), the browser part 131 displays such Web page or the like, and transmits information which is inputted on the Web page from the user, to a link destination server or the like.

The input unit 141 accepts an input of information from the user. The output part 142 outputs various types of information to the user. The communication part 143 establishes connection with other equipment via the network 150, transmits information to the equipment being connected, and receives information transmitted from the equipment being connected.

The cause analysis support server 200 conducts analysis of a cause which has the largest influence on an index being designated, according to a request and an instruction from the client terminal 100, via the network 150, and presents the cause. In addition, the cause analysis support server 200 configures screen information by using HTML or the like, regarding a service to be displayed on the client terminal 100, and transmits the screen information to the client terminal 100.

As shown in FIG. 1, the cause analysis support server 200 is provided with a storage part 220, a control part 230, and a communication part 241.

The storage part 220 is provided with a causal relation table 221, a business goal achievement level table 222, and an influence level table 223.

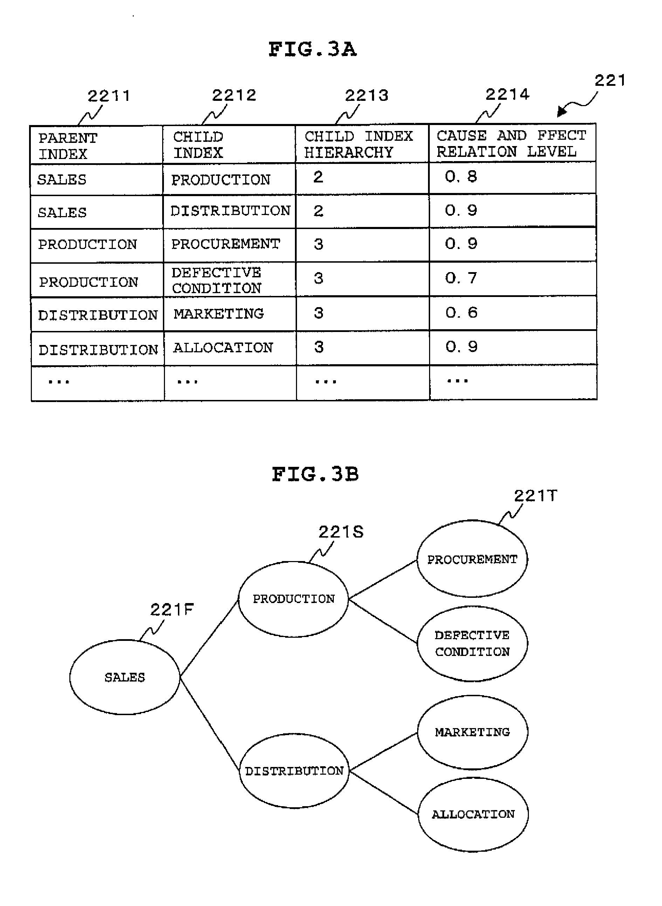

FIG. 3A and FIG. 3B illustrate a configuration example of the causal relation table 221. The causal relation table 221 stores information which specifies indexes having a causal relation, the causal relation between the indexes, and link strength of the causal relation.

FIG. 3A shows a configuration example of the causal relation table 221. FIG. 3B shows a tree structure for explaining an example of the causal relation shown in the configuration example of the causal relation table 221. A record stored in the causal relation table 221 includes information items, corresponding to a parent index field 2211, a child index field 2212, a child index hierarchy field 2213, and a cause and effect relation level field 2214.

The parent index field 2211 is a field for storing information to specify an index indicating a parent side of the causal relation, that is, the effect of the causal relation. By way of example, the parent index field stores information which specifies an index of each business operation, such as sales, production, and distribution.

The child index field 2212 is a field for storing information to specify an index indicating a child side of the causal relation, that is, the cause of the causal relation. By way of example, the child index field stores information specifying an index which may be a cause, such as production, distribution, procurement, and defective condition, when there is a problem in an index specifying each of the business indexes which are stored in the parent index field 2211.

The child index hierarchy field 2213 is a field to store information indicating a hierarchy level in the tree structure of the causal relation which is specified by the causal relation table 221, as to an index identified by the information stored in the child index field 2212. By way of example, when the information stored in the child index hierarchy field 2213 is "2", this child index indicates that it is positioned at the second from the top in the hierarchy in the tree structure of the causal relation. In other words, this child indexes are obtained by directly segmentalizing the index constituting the top hierarchy in the tree structure of the causal relation.

The cause and effect relation level field 2214 is a field to store information which specifies strength of the causal relation between the parent index and the child index. The strength of the causal relation is represented by values from 0 to 1. The cause and effect relation level "1" indicates that the causal relation between the parent index and the child index is strong. As the cause and effect relation level becomes closer to the value "0", i.e., as the value becomes smaller, the causal relation becomes weaker. When the causal relation is strong, change in the child index has a significant impact on change in the parent index. When the causal relation is weak, the change in the child index does not have a profound influence on the change of the parent index.

Here, with reference to FIG. 3B, an explanation will made as to a specific value in the configuration example of the causal relation table 221 as shown in FIG. 3A. Firstly, there are two child indexes "production" and "distribution", which constitute the second hierarchy 221S, for the parent index "sales", which constitutes the first hierarchy 221 F. As shown in FIG. 3A, the cause and effect relation levels between the "sales" and the "production" and between the "sales" and the "distribution" are respectively "0.8" and "0.9", and it can be assumed that the "distribution" has a more significant impact on the index "sales", than the "production".

Furthermore, there are two child indexes "procurement" and "defective condition", which constitute the third hierarchy 221T, for the parent index "production", which constitutes the second hierarchy 221 S. The cause and effect relation levels are respectively "0.9" and "0.7". That is, it can be assumed that the "procurement" has a more significant impact on the index "production", than the "defective condition".

On the other hand, there are two child indexes "marketing" and "allocation", which constitute the third hierarchy 221T, for the parent index "distribution", which constitutes the second hierarchy 221S. The cause and effect relation levels are respectively "0.6" and "0.9". That is, it can be assumed that the "allocation" has a more significant impact on the index "distribution", than the "marketing".

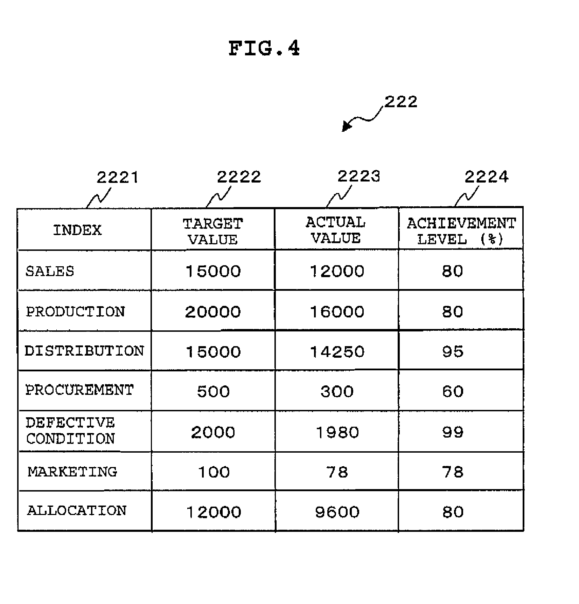

FIG. 4 illustrates a configuration example of the business goal achievement level table 222. The business goal achievement level table 222 stores information, which specifies an index, a target value of the index, an actual value of the index, and an achievement level of the index.

A record which is stored in the business goal achievement level table 222 has information corresponding to the index field 2221, target value field 2222, actual value field 2223, and achievement level field 2224.

The index field 2221 is a field for storing information which specifies an index of business operation. By way of example, this field stores information specifying each business index, such as sales, production, and distribution.

The target value field 2222 is a field for storing information to specify a target value regarding the index which is specified by the information stored in the index field 2221. By way of example, this field stores information specifying a target value of the index which specifies each business index stored in the index field 2221, such as the production, distribution, procurement, and defective condition.

The actual value field 2223 is a field for storing information to specify an actual value regarding the index which is specified by the information stored in the index field 2221. By way of example, this field stores information specifying an actual value of the index which specifies each business index stored in the index field 2221, such as the sales, production, distribution, procurement, and defective condition.

The achievement level field 2224 is a field for storing information to specify an achievement level of the target value as to the index which is specified by the information stored in the index field 2221. It is to be noted that the achievement level is a ratio of the actual value stored in the actual value field 2223, to the target value stored in the target value field 2222, and it is represented by a percentage.

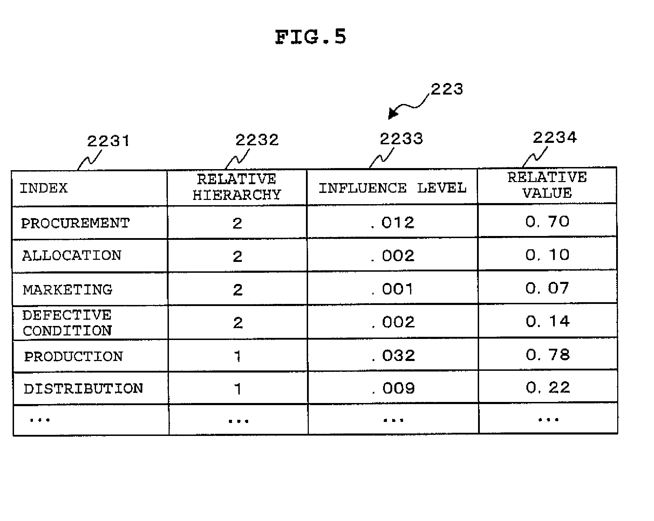

FIG. 5 illustrates a configuration example of the influence level table 223. The influence level table 223 stores information which specifies an index, a relative hierarchy of the index, viewed from a problem-solving target index, an influence level of the index, and a relative value of the influence level of the index.

A record stored in the influence level table 223 has information corresponding to the index field 2231, the relative hierarchy field 2232, the influence level field 2233, and the relative value field 2234.

The index field 2231 is a field for storing information which specifies an index of the business operation in the hierarchy under the problem-solving target index. By way of example, when the problem-solving target index is "sales", the index field stores information for specifying an index of each of the business operations constituting the lower hierarchy of the sales index, such as the procurement, allocation, marketing, defective condition, production, and distribution.

The relative hierarchy field 2232 is a field for storing information to specify a relative hierarchy with respect to the problem-solving target index, in the tree structure of the causal relation specified by the causal relation table 221, as to the index specified by the information stored in the index field 2231.

The influence level field 2233 is a field for storing information to specify the level of influence on the problem-solving target index, exerted by the index specified by the information stored in the index field 2231. By way of example, the influence level field 2233 stores a value for specifying an influence on the index "sales" being the problem-solving index, exerted by the index specifying each of the business operation indexes stored in the index field 2231, such as the procurement, allocation, marketing, defective condition, production, and distribution.

The relative value field 2234 is a field for storing a value which is compared with a second index in the same hierarchy, as to the influence level of the index specified by the information stored in the index field 2231. It is to be noted that each value in the relative value field 2234 represents a ratio of the influence level of the index in the same hierarchy stored in the relative hierarchy field 2232 to the problem-solving target index, and it is expressed by a decimal between 0 and 1, or an integer. In other words, information stored in the relative value field 2234 represents a ratio of the influence level of the index, to the total level of influence exerted by the indexes belonging to the same hierarchy on the problem-solving target index.

Here, with reference to FIG. 1 again, an explanation will be made. The control part 230 incorporates an input processor 231, an output processor 232, and a cause analyzer 233.

The input processor 231 accepts input information which is transmitted from the client terminal 100 via the communication part 241. Specifically, the input processor 231 accepts inputs from the client terminal 100 via the network 150, information of the problem-solving target index and information which is necessary for conducting the cause analysis but now missing. Then, the input processor 231 passes the information being accepted, an instruction to start the cause analysis processing, and the like, to the cause analyzer 233.

The output processor 232 transmits output information to the client terminal 100 via the communication part 241. The output information may be, for example, a graph relating to the index to be displayed as a result of the analysis conducted by the cause analyzer 233, screen information which is necessary to be displayed for accepting input information, and the like.

Upon receipt of the instruction to start the cause analysis processing from the input processor 231, the cause analyzer 233 specifies tree information of causal relation and achievement information of a profit goal, as to the index as a target of the cause analysis, and calculates a causal influence level. Then, the cause analyzer 233 specifies a rank order of causal influence according to the causal influence level, and with regard to an index having a high order, the cause analyzer 233 acquires information, such as associated graph information, from each business server or the like, not illustrated, to generate screen information, and then instructs the client terminal 100 to display the screen information.

The communication part 241 is connected to other equipment via the network 150, receives information being transmitted from other equipment being connected, and transmits information to the other equipment being connected.

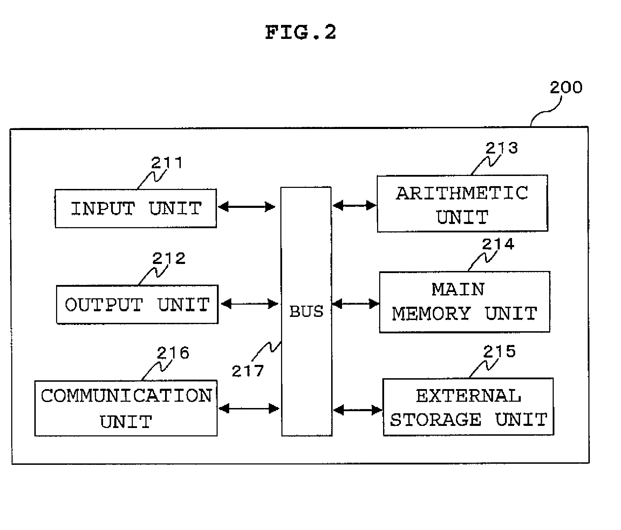

FIG. 2 illustrates a hardware configuration of the cause analysis support server 200 according to the present embodiment.

In the present embodiment, the cause analysis support server 200 may be, for example, a PC (Personal Computer), a workstation, a server device, various portable phone terminals, and a computing machine such as a PDA (Personal Digital Assistant).

The cause analysis support server 200 incorporates an input unit 211, an output unit 212, an arithmetic unit 213, a main memory unit 214, an external storage unit 215, a communication unit 216, and a bus 217 which connects each of those units with one another.

The input unit 211 is a device for accepting an input, for instance, from a keyboard, a mouse, a touch pen, other pointing device, or the like.

The output unit 212 is a display, for instance, for perform displaying operation. The arithmetic unit 213 is a device such as a CPU (Central Processing Unit), for instance.

The main memory unit 214 is a memory device such as an RAM (Random Access Memory), for instance.

The external storage unit 215 is a nonvolatile storage, such as a hard disk drive and a flash memory, for instance.

The communication unit 216 is a radio communication device for establishing wireless communication via an antenna, or a cable communication device for establishing wire communication via a network cable.

It is to be noted that for the cause analysis support server 200, it is not necessary to be provided with a hardware device having an I/O function to interact with a user. In other words, the devices corresponding to the input unit 211 and the output unit 212 are not required. Therefore, neither the input unit nor the output unit may be provided in the cause analysis support server.

The storage part 220 of the cause analysis support server 200 may be implemented by the main memory unit 214 or the external storage unit 215 of the cause analysis support server 200.

The input processor 231, the output processor 232, the cause analyzer 233 of the cause analysis support server 200 are implemented by a program which allows the arithmetic unit 213 of the cause analysis support server 200 to perform processing.

This program is stored in the main memory unit 214 or in the external storage unit 215, loaded on the main memory unit 214 for execution, and it is executed by the arithmetic unit 213.

The communication part 241 of the cause analysis support server 200 is implemented by the communication unit 216 of the cause analysis support server 200.

In addition, though not illustrated, the client terminal 100 is also provided with a hardware configuration similar to the cause analysis support server 200. However, it is indispensable for the client terminal 100 to be provided with a device corresponding to the input unit 211 and the output unit 212 of the cause analysis support server 200, that is, a hardware device having the I/O function to interact with the user.

The browser part 131 of the client terminal 100 is implemented by a program which allows the arithmetic unit 213 of the client terminal 100 to perform processing.

This program is stored in the main memory unit 214 or in the external storage unit 215, loaded on the main memory unit 214 for execution, and it is executed by the arithmetic unit 213.

In addition, the storage part 120 of the client terminal 100 is implemented by the main memory unit 214 or the external storage unit 215 of the client terminal 100.

The input part 141 of the client terminal 100 is implemented by the input unit 211 of the client terminal 100.

The output part 142 of the client terminal 100 is implemented by the output unit 212 of the client terminal 100.

The communication part 143 of the client terminal 100 is implemented by the communication unit 216 of the client terminal 100.

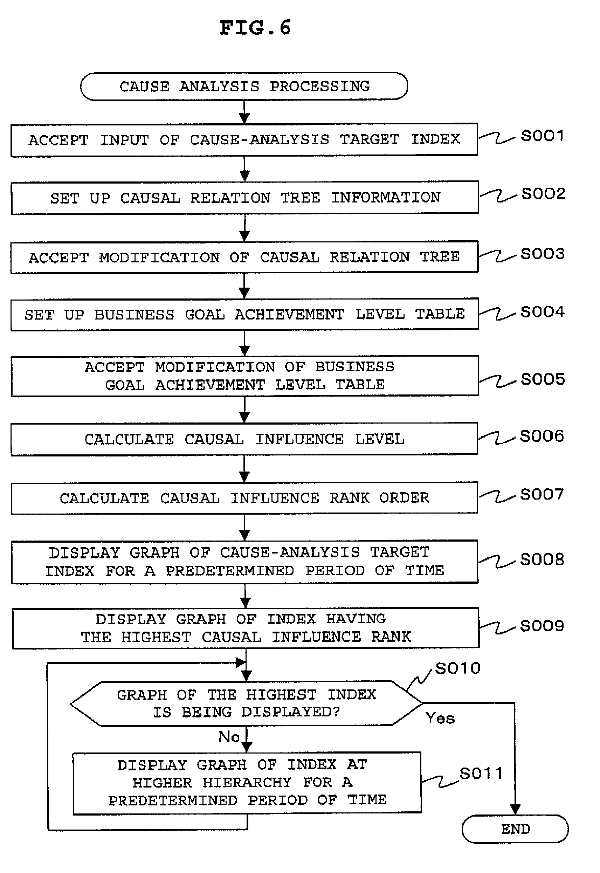

Next, an overview of the cause analysis processing of the present embodiment will be explained with reference to FIG. 6.

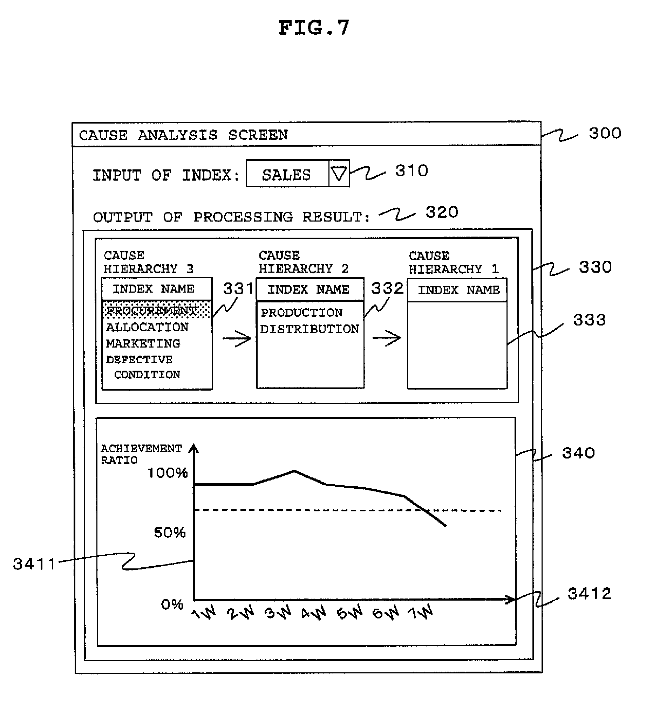

FIG. 6 illustrates a flow of the cause analysis processing. Upon accepting a request to start cause analysis from the client terminal 100, the output processor 232 sets up a cause analysis screen 300 as shown in FIG. 7 to display it on the client terminal 100, and then, the cause analysis processing is started.

Firstly, the cause analyzer 233 accepts from the client terminal 100, an input regarding a cause-analysis target index (step S001). Specifically, the cause analyzer 233 receives information which designates an index as a target for the cause analysis, inputted in an index input field 310 of the cause analysis screen 300 as shown in FIG. 7, according to an instruction from the user via the client terminal 100.

Here, an explanation will be made regarding the cause analysis screen 300 as shown in FIG. 7. FIG. 7 illustrates a configuration example of the cause analysis screen 300. The cause analysis screen 300 is provided with the index input field 310, a process result output field 320. The index input field 310 is a field for accepting from a user, an input of a cause-analysis target index. The process result output field 320 is a field for displaying a result of the cause analysis regarding the index which is designated in the index input field 310. The process result output field 320 is provided with a cause hierarchy display area 330 and a causal index related information display area 340. The cause hierarchy display area 330 is divided into the regions respectively for the causal index hierarchy levels 331 to 333. The indexes belonging to the respective hierarchy levels are displayed in descending order of the influence which is exerted on the cause-analysis target index. In addition, the cause hierarchy display area 330 accepts via the input part 141, a designation from the user as to any of the indexes belonging to any of the hierarchy. The causal index related information display area 340 is a field for displaying information relating to the causal index, such as a line graph which is allocated with an achievement ratio of the index in the vertical axis 3411 and a time in the horizontal axis 3412, for instance.

Next, the cause analyzer 233 establishes causal relation tree information with regard to the cause-analysis target index (step S002). Specifically, the cause analyzer 233 reads all the information regarding the index on the child side of the target index accepted in the step S001, from the information stored in the parent index field 2211 of the causal relation table 221. Then, the cause analyzer 233 specifies the index stored in the child index field 2212 of the index accepted in the step S001, and establishes the causal relation tree information as the lower hierarchy information of the index accepted in the step S001. The cause analyzer 233 specifies indexes belonging to the lower hierarchy, with respect to all the indexes stored in the child index field 2212, sequentially repeating this procedure until the index has no more child index, and then establishes the causal relation tree up to the lowest hierarchy.

Next, the cause analyzer 233 accepts modification information for the causal relation tree information (step S003). Specifically, if any information of the cause and effect relation level field 2214 is missing, as to the cause relation tree which is established in the step S002, the cause analyzer 233 displays a screen for prompting an input of the information for the missing part, and accepts the input which is reflected on the information of the causal relation tree.

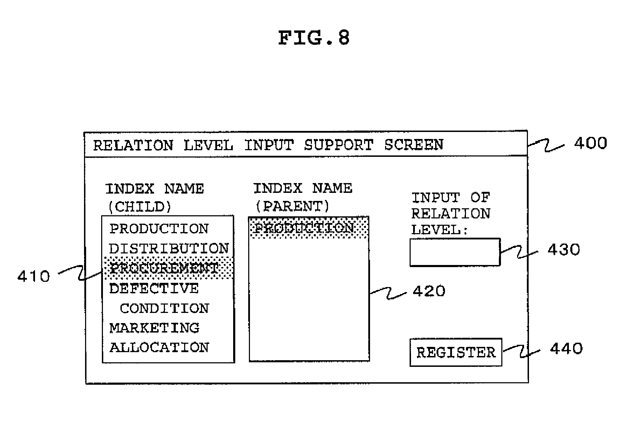

Here, with reference to FIG. 8, an explanation will be made as to the screen for prompting the input of the information regarding the cause and effect relation level which is displayed by the cause analyzer 233.

FIG. 8 illustrates a configuration example of the relation level input support screen 400. The relation level input support screen 400 includes an index name (child) input field 410, an index name (parent) input field 420, a relation level input field 430, and a register button 440.

The index name (child) input field 410 is a field for accepting a designation of the index on the lower side of the index for designating the relation level. In the present embodiment, the browser part 131 displays in advance, indexes in the hierarchy lower than the cause-analysis target index accepted in the step S001, according to the information of the causal relation tree which is read in advance from the causal relation table 221, and accepts an input for making a selection from the indexes being displayed.

The index name (parent) input field 420 is a field for accepting a designation of the index on the higher side of the index for designating the relation level. In the present embodiment, when an input is made in the index name (child) input field 410, the browser part 131 displays an index in the higher hierarchy than the index being inputted, according to the information of the causal relation tree which is read in advance from the causal relation table 221, and accepts an input for making a selection from the index being displayed. By way of example, when the index inputted in the index name (child) input field 410 is "procurement", the browser part 131 displays the index "production" being a higher-level index in selectable manner, in the index name (parent) input field 420.

The relation level input field 430 is a field for accepting an input of the cause and effect relation level. In the present embodiment, the browser part 131 accepts an input of the relation level into the relation level input field 430.

Upon receipt of the input, the index inputted in the index name (child) input field 410, the index inputted in the index name (parent) input field 420, and a value inputted in the relation level input field 430 are registered according to the register button 440.

Specifically, upon accepting the input on the register button 440, the browser part 131 specifies respectively, an index inputted in the index name (child) input field 410 as child index information, an index inputted in the index name (parent) input field 420 as parent index information, a value inputted into the relation level input field 430 as cause and effect relation level information between the parent index and the child index, and transmits a request to the causal analysis support server 200 to register the specified information as modification of the causal relation tree. It is to be noted that the cause analyzer 233 of the cause analysis support server 200 modifies the information of the causal relation tree by using the modification information which is requested to be registered.

Next, the cause analyzer 233 establishes a business goal achievement level table as to each index in the lower-level hierarchy of the cause-analysis target index (step S004). Specifically, the cause analyzer 233 updates to the latest information, as to each index included in the causal relation tree which has been modified in the step S003, the information being stored in the target value field 2222 of the business goal achievement level table 222, the information stored in the actual value field 2223, and the information stored in the achievement level field 2224. By way of example, the cause analyzer 233 acquires the target value and the actual value from a predetermined business information processing server, not illustrated, connectable to the network 150, and calculates an achievement level of the actual value to the target value on percentage.

Next, the cause analyzer 233 accepts modification of the information in the business goal achievement level table 222 (step S005). Specifically, with regard to the information in the business goal achievement level table 222 which is established in the step S004, if the information of the target value field 2222 or the information of the actual value field 2223 is missing, the cause analyzer 233 displays a screen for prompting an input of the information for the missing part, accepts the input, and reflects the input on the information in the business goal achievement level table 222.

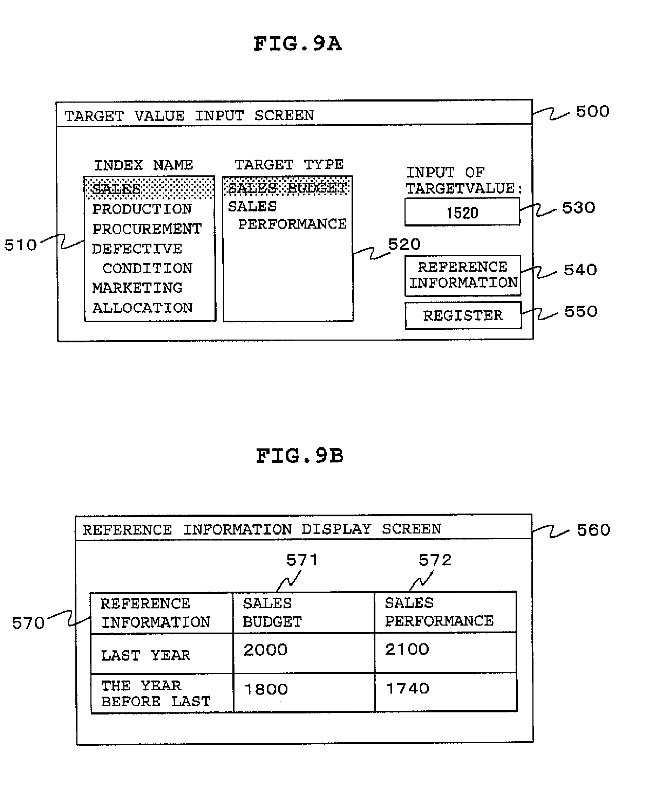

Here, with reference to FIG. 9A and FIG. 9B, an explanation will be made regarding the screen for prompting an input of the information as to the business target value and the actual value, which are displayed by the cause analyzer 233.

FIG. 9A illustrates a configuration example of the target value input screen 500. The target value input screen 500 is provided with an index name input field 510, a target type input field 520, a target value input field 530, a reference information button 540, and a register button 550.

The index name input field 510 accepts a designation of the index name as an object for inputting information regarding the target value or the actual value. In the present embodiment, the browser part 131 displays in advance indexes stored in the index field 2221 of the business goal achievement level table 222, and accepts from a user an input for selecting an index.

The target type input field 520 accepts a selection of a budget (target) or an actual performance, as to the index inputted in the index name input field 510. In the present embodiment, the browser part 131 accepts a selection input, either the budget or the actual performance, as to the index inputted in the index name field 510.

The target value input field 530 accepts from the user an input of a target value regarding either the budget or the actual performance which is inputted in the target type input field 520, as to the index inputted in the index name input field 510. In the present embodiment, the browser part 131 accepts the target value which is inputted from the user.

The reference information button 540 accepts an instruction to display information which is useful for the user to input the target value in the target value input field 530. In the present embodiment, upon accepting the input to the reference information button 540, the browser part 131 sets up the reference information display screen 560 as shown in FIG. 9B and displays the screen for the user.

FIG. 9B illustrates a configuration example of the reference information display screen 560. The reference information display screen 560 is provided with a reference information display area 570. In the reference information display area 570, there is displayed information which is useful for inputting the target value, that is, in the present embodiment, the budget and the actual result for each of last year and the year before. The reference information display area 570 displays the sales budget display field 571 and the sales performance display field 572, year-by-year. In order to display the reference information display screen 560, the browser part 131 which has accepted the input to the reference information button 540 transmits the index inputted in the index name input field 510 to the cause analysis support server 200. The cause analyzer 233 accepts the index, acquires the past budget and actual result information from the business information server not illustrated, which is connectable with the network 150, and transmits the acquired information to the browser part 131. Then, the browser part 131 displays the budget and actual result information being received in the reference information display area 570.

The register button 550 registers the index, the information either budget or performance, and the target value, which are inputted by the user, respectively in the index name input field 510, in the target type input field 520, and in the target value input field 530. Specifically, upon accepting the input to the register button 550, the browser part 131 specifies each of the index inputted in the index name input field 510, the information either budget or performance being inputted in the target type input field 520, and the target value inputted in the target value input field 530, and transmits to the cause analysis support server 200, a request to register such specified information as modification information for the business goal achievement level table 222. Then, the cause analyzer 233 stores the modification information which is requested to be registered, in the business goal achievement level table 222.

Next, the cause analyzer 233 calculates the causal influence level, as to each of the indexes in the hierarchy level lower than that of the cause-analysis target index (step S006).

Specifically, applying the following formulas (1) and (2), the cause analyzer 233 uses the causal relation between each of the indexes, the achievement level of each of the indexes, and the relation level between each of the indexes, so as to convert into numbers, the level of the causal influence on the cause-analysis target index, the influence being exerted by each of the indexes at the hierarchy lower than that of the cause-analysis target index.

The following formula (1) is an expression for obtaining the causal influence level e, exerted on the cause-analysis target index, as to each index at the hierarchy immediately under the cause-analysis target index. The formula (2) is an expression for obtaining the causal influence level e, exerted on the cause-analysis target index, as to each index at the hierarchy, the level of which is lower than that of the index at the hierarchy immediately under the cause-analysis target index.

Causal influence level *e* of the index immediately under the cause-analysis target index =
(1 – Goal achievement level of cause-analysis target index) × (1 – Goal achievement level of influence-level calculation target index) × (Cause and effect relation level of influence-level calculation target index)

[FORMULA 1]

Causal influence level *e* of the index lower than the index immediately under the cause-analysis target index =
(Influence level of the parent index of influence -level calculation target index) × (1 – Goal achievement level of influence-level calculation target index) × (Cause and effect relation level of the influence-level calculation target index)

[FORMULA 2]

In other words, the formula (2) indicates that in calculating the causal influence level of the index belonging to the hierarchy two-level lower than the cause-analysis target index, or lower than that, the causal influence level is obtained by multiplying the causal influence level of an index higher than (an effect side of) the causal influence-level calculation target index, not-achieved level of the causal influence-level calculation target index, and relation level between the causal influence-level calculation target index and the index at the higher hierarchy. It is to be noted that in the not-achieved level indicates a ratio of the remainder which is obtained by subtracting the goal achievement level from the goal (i.e., "1" in the formula (2)).

The formula (1) indicates that as for the causal influence level of the index immediately under the cause-analysis target index, it is obtained by multiplying the not-achieved level of the cause-analysis target index, not-achieved level of the causal influence-level calculation target index belonging to the hierarchy one level lower than the cause-analysis target index, and relation level between the cause-analysis target index and the causal influence-level calculation target index.

By using the formula (1), the cause analyzer 233 calculates the level of the causal influence on the cause-analysis target index, the influence being exerted by each index at the hierarchy one level lower than the cause-analysis target index. In addition, using the formula (2), the cause analyzer 233 calculates the level of the causal influence on the causal-analysis target index, the influence being exerted by each index which belongs to two levels lower or further than the cause-analysis target index. It is to be noted that the cause analyzer 233 stores the causal influence level being calculated, in the influence level field 2233 of the influence level table 223.

Next, the cause analyzer 233 calculates a rank order of the causal influence for each hierarchy, according to the level of the causal influence (step S007),

Specifically, the cause analyzer 233 uses the causal influence level calculated in the step S006 to obtain the rank order, according to the descending order of the causal influence levels of the indexes belonging to the same hierarchy. When the rank order is obtained, the cause analyzer 233 uses the formula (3) shown below, converts the causal influence level of each index into a relative value, and assigns a rank to the relative value in descending order among the indexes belonging to the same hierarchy.

It is to be noted that E(i, j) represents a relative value of the causal influence level as to the j-th index at the hierarchy, i-level lower than the cause-analysis target index, with respect to the index at the uppermost hierarchy on the causal relation tree. Furthermore, n is a value representing the number of indexes belonging to the hierarchy, which is i-level lower than the cause-analysis target index. By way of example, when the "sales" is designated as the cause-analysis target index, according to the causal relation table 221, two indexes "production" and "distribution" belong to the hierarchy one-level below (when i = 1), and the value of n at this hierarchy is "2". Similarly, four indexes "procurement", "defective condition", "marketing", and "allocation" belong to the hierarchy two-level below (when i = 2), and the value of n at this hierarchy is "4".

$$E(i, j) = \frac{e(i,j)}{\sum_{j=1}^{n} e(i,j)}$$

[FORMULA 3]

The formula (3) expresses that the relative value of the causal influence level of an index is equal to a value of the ratio of the causal influence level of the index, to a value obtained by totalizing all the causal influence levels of the indexes belonging to the same hierarchy, It is to be noted that the cause analyzer 233 stores the relative value of the causal influence level being calculated in the relative value field 2234 of the influence level table 223.

Next, the cause analyzer 233 displays a graph regarding the cause-analysis target index for a predetermined period of time (step S008).

Specifically, the cause analyzer 233 generates a graph regarding the cause-analysis target index, i.e., the index accepted in the step S001, and sets up the cause analysis screen 300 for displaying the graph in the causal index related information display area 340. Then, the cause analyzer 233 transmits the screen being set up to the client terminal 100, so as to display the screen in the browser part 131 of the client terminal 100. It is to be noted that upon generating the graph to be displayed in the causal index related information display area 340, the cause analyzer 233 acquires information for displaying the graph, from the predetermined business information processing server, not illustrated, which is connectable to the network 150.

By way of example, as shown in FIG. 7, the cause analyzer 233 displays a sales achievement ratio per week in the causal index related information display area 340, assuming the vertical axis 3411 as the sales achievement ratio and the horizontal axis 3412 as a period (week).

Next, the cause analyzer 233 displays a graph regarding the cause at the lowest hierarchy which has an influence on the cause-analysis target index, for a predetermined period of time (step S009).

Specifically, the cause analyzer 233 specifies an index which has the highest causal influence, being first-ranked in the indexes at the lowest hierarchy of the causal relation tree, among the indexes having an influence on the cause-analysis target index, i.e., the index accepted in the step S001, generates a graph regarding the index, and sets up the cause analysis screen 300 for displaying the graph in the causal index related information display area 340.

Then, the cause analyzer 233 transmits the screen being set up to the client terminal 100, so as to display the screen on the browser part 131 of the client terminal 100. It is to be noted that upon generating the graph to be displayed in the causal index related information display area 340, the cause analyzer 233 acquires information for displaying the graph, from the predetermined business information processing server, not illustrated, which is connectable to the network 150.

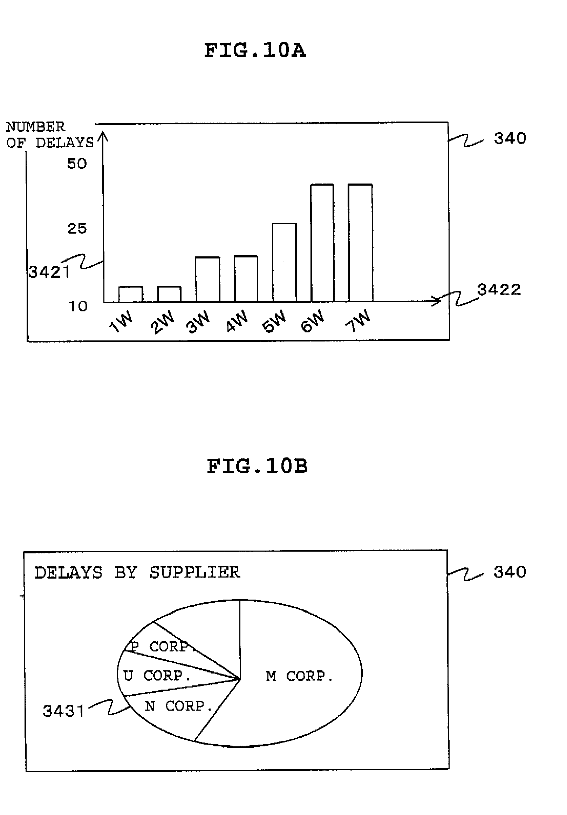

By way of example, as shown in FIG. 10A, the cause analyzer 233 displays the number of delays in procurement per week in the causal index related information display area 340, assuming the vertical axis 3421 as the number of delays in procurement, and assuming the horizontal axis 3422 as the period (week).

Next, the cause analyzer 233 determines whether or not a graph indicating the top level index is the object to be displayed (step S010).

Specifically, the cause analyzer 233 determines whether or not the index belonging to the hierarchy immediately under the cause-analysis target index is directed to be displayed in the causal index related information display area 340 of the cause analysis screen 300. On this occasion, the cause analyzer 233 specifies the index of the graph generated last time, out of the indexes whose graph are generated either in the step S009 or in the step S011 described below, and determines whether or not the index is the one belonging to the hierarchy immediately under the cause-analysis target index, by checking the index against the causal relation tree which is set up in the step S002.

If the graph of the top level index is the display target ("Yes" in step S010), the cause analyzer 233 terminates the cause analysis processing.

If the graph of the highest level index is not the display object ("No" in step S010), the cause analyzer 233 displays a graph of the index placed in the upper hierarchy for a predetermined period of time (step S011).

Specifically, the cause analyzer 233 specifies from the causal relation tree, a parent index of the index which is displayed in the causal index related information display area 340 of the cause analysis screen 300, acquires information as to the specified index, from the predetermined business information processing server, not illustrated, which is connectable to the network 150, generates a graph, and sets up the cause analysis screen 300 for displaying the graph in the causal index related information display area 340.

Then, the cause analyzer 233 transmits the screen being set up to the client terminal 100, so as to display the screen on the browser part 131 of the client terminal 100.

By way of example, as shown in FIG. 10B, the cause analyzer 233 displays the number of delays in production in the form of a pie chart 3431, in the causal index related information display area 340, showing the difference in the number of delays, comparing each supplier. Then, the cause analyzer 233 returns the processing to step S010.

Up to this point, the flow of the cause analysis processing has been described.

When the cause analysis processing is executed, the cause-analysis target index is specified, and it is possible to identify an index having the most significant influence on the cause-analysis target index and display a graph regarding this index. In other words, this processing enables a display of information which has a possibility to solve the problem.

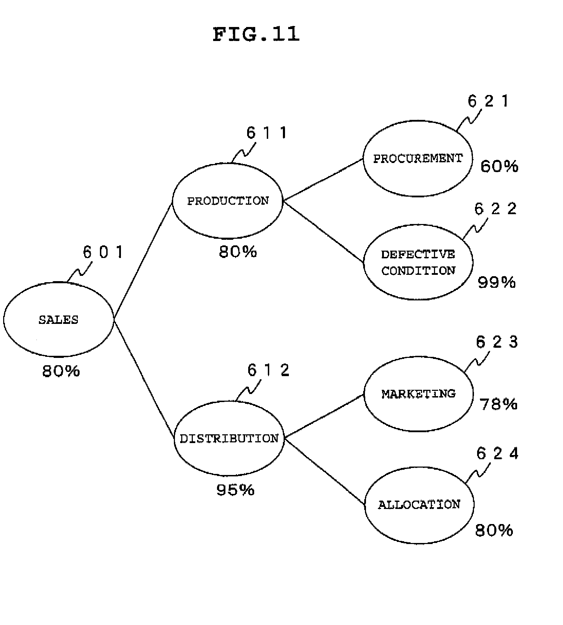

FIG. 11 illustrates an information model in which the business goal achievement level established in the steps S004 and S005 is superimposed on the causal relation tree which is established in the steps S002 and S003 of the cause analysis processing. The causal relation tree established in the steps S002 and S003 assumes the sales index 601 as the cause-analysis target index, and includes the production index 611 and the distribution index 612 as its child indexes. The production index 611 further includes child indexes, the procurement index 621 and the defective condition index 622, and the distribution index 612 further includes as its child indexes, the marketing index 623 and the allocation index 624.

The goal achievement level of the sales index 611 is 80%, the goal achievement level of the production index 611 is 80%, and the goal achievement level of the distribution index 612 is 95%. The goal achievement levels of the procurement index 621 and the defective condition index 622 are 60% and 99%, respectively. The goal achievement levels of the marketing index 623 and the allocation index 624 are 78% and 80%, respectively.

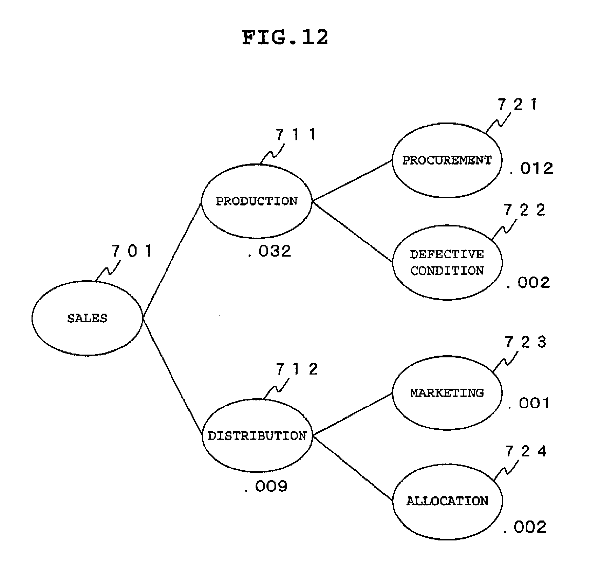

FIG. 12 illustrates a model showing the causal influence level which is calculated in the step S006 of the cause analysis processing. It is to be noted that each index is provided with the causal influence level (round off the number to the third decimal place), which is obtained in the formula (1) and in the formula (2) as described above, in the model similar to the causal relation tree as shown in FIG. 11. With regard to the child indexes of the cause analysis target index, the production index 711 has the causal influence level, $(1 - 0.8) \times (1 - 0.8) \times 0.8 = 0.032$, according to the formula (1), and the distribution index 712 has the causal influence level, $(1 - 0.8) \times (1 - 0.95) \times 0.9 = 0.009$, according to the formula (1). The indexes belonging to the lower-level hierarchy of the child index, the procurement index 721, the defective condition index 722, the marketing index 723, and the allocation index 724 have the causal influence levels, according to the formula (2), respectively, $0.032 \times (1 - 0.6) \times 0.9 = 0.012$ (to be more precise, 0.01152), $0.032 \times (1 - 0.99) \times 0.7 = 0.002$ (to be more precise, 0.00224), $0.009 \times (1 - 0.78) \times 0.6 = 0,001$ (to be more precise, 0.001188), and $0.009 \times (1 - 0.8) \times 0.9 = 0.002$ (to be more precise, 0.00162).

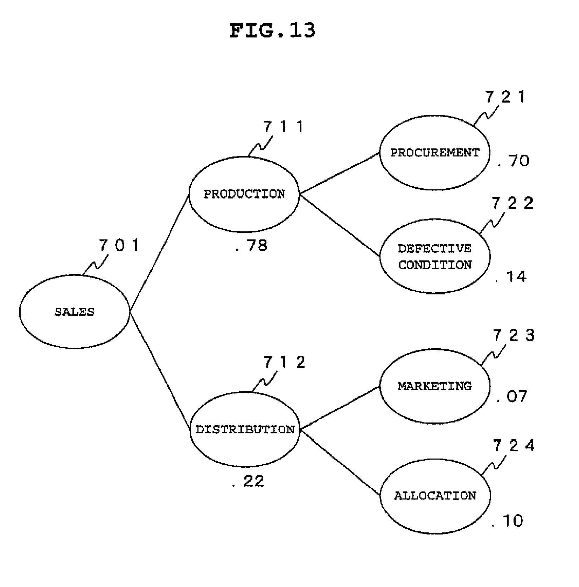

FIG. 13 shows information which specifies a value of the proportion of the causal influence, in order to specify the causal influence rank order that is calculated in the step S007 of the cause analysis processing. For the model similar to the causal relation tree as shown in FIG. 11 and FIG. 12, each index is provided with a relative value of the causal influence (round off the number to the second decimal place), which is obtained in the formula (3) as described above. With regard to the child indexes of the cause-analysis target index, the production index 711 has the relative value of the causal influence level, $0.032/0.041 = 0.78$, and the distribution index 712 has $0.009/0.041 = 0.22$, according to the formula (3). The indexes belonging to the lower-level hierarchy of the child index, the procurement index 721, the defective condition index 722, the marketing index 723, and the allocation index 724 have relative values of the causal influence level, according to the formula (3), respectively, 0.01152/0.016568 = 0.70 (to be more precise, 0.6953...), 0.00224/0.016568 = 0.14 (to be more precise, 0.1352...), 0.001188/0.016568 = 0.07 (to be more precise, 0.0717...), and 0.00162/0.016568 = 0.10 (to be more precise, 0.0977...).

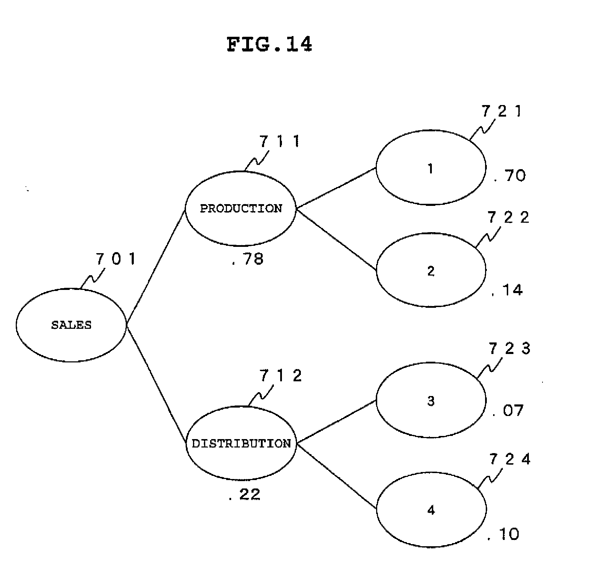

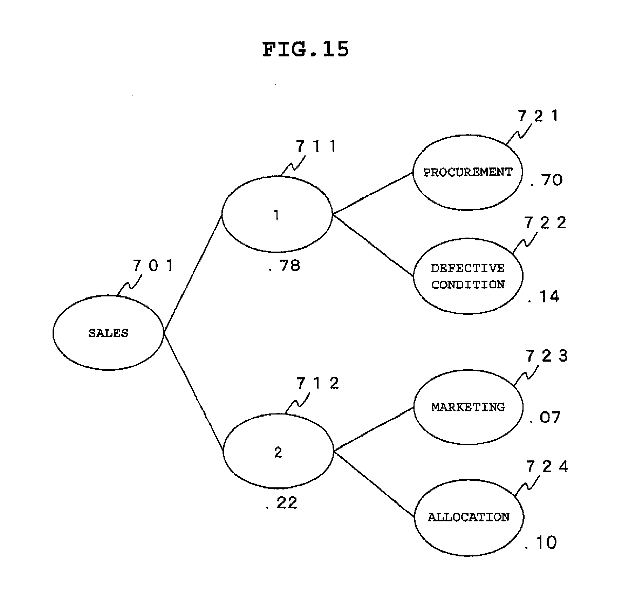

When the indexes are ranked based on the relative values of the causal influence level at the undermost cause hierarchy, as shown in FIG. 14, the procurement index 721 is the first, the defective condition index 722 is the second, the allocation index 724 is the third, and the marketing index 723 is the fourth, in descending order of the relative values of the causal influence level. In other words, it is determined that the procurement index 721 is the index which has the most significant influence on the sales index 701. As shown in FIG. 15, as for the causal influence level at the higher cause hierarchy, it is determined that the production index 711 is the first and the distribution index 712 is the second, in descending order of the relative values of the causal influence level.

As thus described, according to the cause analysis processing relating to the present invention, as to events having causal relations, multiple indexes each having a different unit for specifying the quantity are compared by using a common unit, i.e., an achievement level. Therefore, it is possible to clarify the ranked order of the causal relations, thereby enabling an easy identification of a causal index.

In particular, it is possible to obtain information which may be a clue to effectively solve a problem regarding the management in a BI (Business Intelligence) system. In the BI system, an event having a problem to be solved may occur due to complex causes, and multiple business systems have to be integrated in order to conduct an analysis of the problem, since the business systems include various units to express the influence level of each of the causes.

Up to this point, one embodiment relating to the present invention has been discussed.

According to the cause analysis support system 1 which is one embodiment of the present invention, in the case where multiple business information items respectively including different measured indexes are collected to solve a management problem, it is possible to easily find out an index which is a cause of the problem to be solved.

The present invention has been explained specifically so far, on the basis of one preferred embodiment. However, the present invention is not limited to this embodiment, and any modifications are possible as far as all such modifications are intended to be included within the scope of the invention.

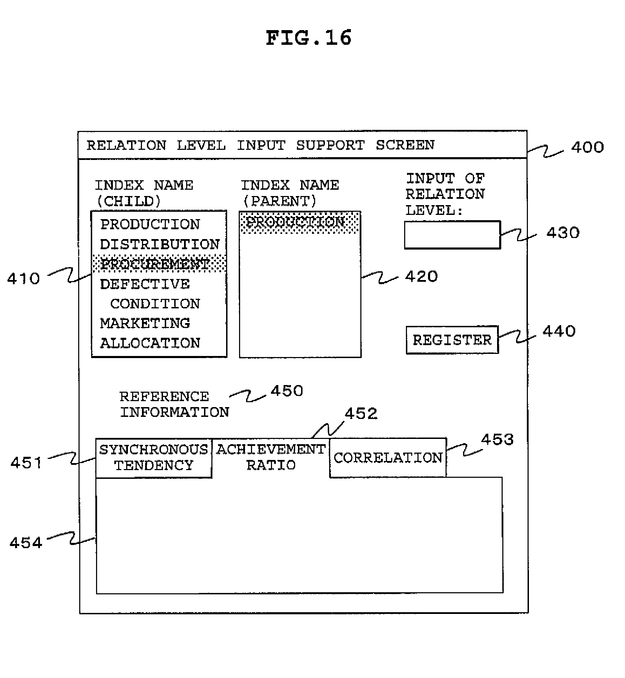

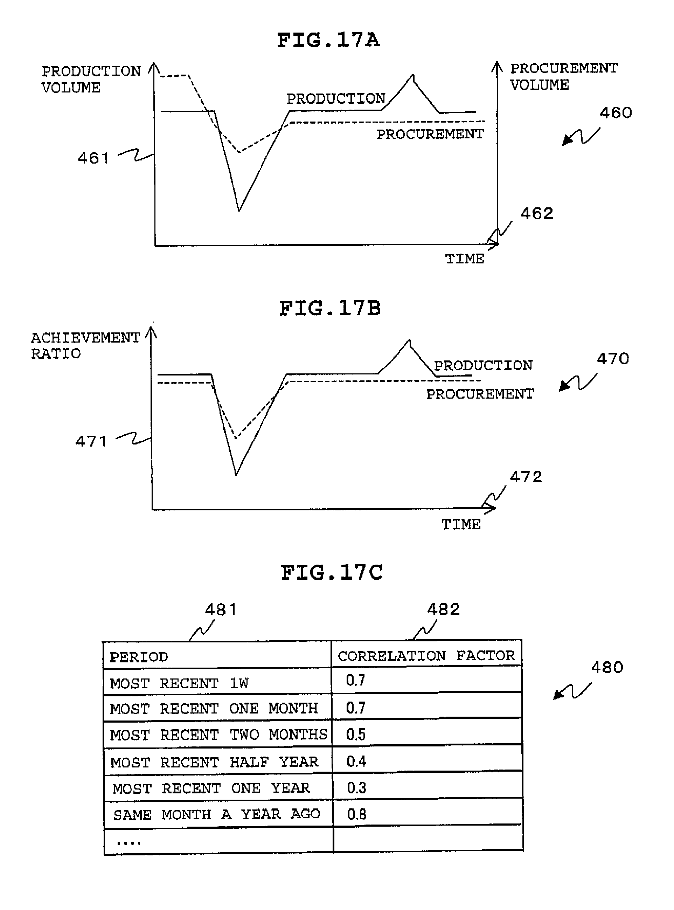

By way of example, in the step S003 of the cause analysis processing according to the embodiment as described above, the cause analyzer 233 accepts an input of the relation level by using the relation level input support screen 400. On this occasion, however, as shown in FIG. 16 and FIG. 17, it is further possible to display reference information for helping the user to input the relation level.

FIG. 16 illustrates a modification example of the relation level input support screen 400. The modification example of the relation level input support screen 400 as shown in FIG. 16 is basically the same as the relation level input support screen 400 according to the first embodiment, but the modification example is different in the point that it is provided with a reference information display area 450.

The reference information display area 450 includes a synchronous tendency display tab 451, an achievement ratio display tab 452, a correlation display tab 453, and a detailed display area 454. Any one of the synchronous tendency display tab 451, the achievement ratio display tab 452, and the correlation display tab 453, allows the pertinent information to be displayed in the detailed display area 454 upon accepting a designation.

The synchronous tendency display tab 451 accepts a directive to display information showing a graph which represents past actual performance values in time sequence, as to the index designated as the index name (child) 410 and the index designated as the index name (parent) 420. FIG. 17A illustrates the graph 460 shown in the detailed display area 454, when the synchronous tendency display tab 451 is designated. In the graph 460, the index designated as the index name (child) 410 and the index designated as the index name (parent) 420 are assigned to two axes along the vertical axis 461, and the time is assigned to the horizontal axis 462. Further in the graph 460, there are displayed actual performance values which the cause analyzer 233 has acquired from the predetermined business information processing server, not illustrated, which is connectable to the network 150. The user is allowed to figure out relevancy and tendency shown in the fluctuation of the performance values, and determine the relation level.

The achievement ratio display tab 452 accepts a directive to display information showing a graph which represents past achievement ratio in time sequence, as to the index designated as the index name (child) 410 and the index designated as the index name (parent) 420. FIG. 17B illustrates the graph 470 shown in the detailed display area 454, when the achievement ratio display tab 452 is designated. In the graph 470, the achievement ratio assigned to the vertical axis 471, and the time is assigned to the horizontal axis 472. Further in the graph 470, there are displayed an achievement ratio along the time axis, the ratio being calculated based on a target value and an actual performance value, acquired by the cause analyzer 233 from the predetermined business information processing server, not illustrated, which is connectable to the network 150. The user is allowed to figure out synchronous status shown in the fluctuation of the achievement ratio, and determine the relation level.

The correlation display tab 453 accepts a directive to display information showing a table which represents past correlation factors every certain period of time, between the index designated as the index name (child) 410 and the index designated as the index name (parent) 420. FIG. 17C illustrates the correlation factor table 480 shown in the detailed display area 454, when the correlation display tab 453 is designated. The correlation factor table 480 includes a period field 481 and the correlation factor field 482. In the period field 481, a period for taking the achievement ratio of each index, during which the correlation factor is aggregated, is displayed, and in the correlation factor field 482, the correlation factor between the achievement ratios of the indexes during the period is displayed, the period corresponding to the one displayed in the period field 481. It is to be noted that the cause analyzer 233 calculates the correlation factor by using the formula (4) as described below.

$$\text{Correlation factor} = \text{Covariance of Child index and Parent index} / \text{Standard deviation of Child index} \times \text{Standard deviation of Parent index}$$

[FORMULA 4]

In other words, in the correlation factor table 480, there are displayed correlation factors obtained by the cause analyzer 233 according to the formula (4), as to the achievement ratio calculated based on the target value and the actual performance value being acquired from the predetermined business information processing server, not illustrated, which is connectable to the network 150. The user is allowed to figure out the correlation factor of the achievement ratio, and determine the relation level.

It is to be noted that the cause analyzer 233 calculates the covariance as an element of the numerator to be used in the formula (4), based on a product of deviations of the respective indexes, as to a set of values of the two indexes, the child index and the parent index. Furthermore, the cause analyzer 233 calculates the denominator to be used in the formula (4), based on a product of the standard deviations of the respective indexes.

With the configuration above, upon inputting the relation level, it is possible to guide the user in deciding the relation level based on the past actual performance value, thereby enabling a support for inputting the relation level, and allowing the user to conduct an appropriate cause analysis.

By way of example, the cause analysis support server 200 according to one embodiment performs the cause analysis processing upon receipt of the request from the client terminal 100, but it is not limited to this procedure. In other words, the client terminal 100 may be provided with the cause analyzer 233, the casual relation table 221, the business goal achievement level table 222, and the influence level table 223, so as to conduct the cause analysis processing.

With the configuration above, it is possible to reduce communications traffic with the cause analysis support server 200, thereby enhancing responsivity in operations.

In addition, in one embodiment of the cause analysis processing, for instance, the formula (3) is used to obtain a relative value of the causal influence level, thereby specifying the causal influence rank order. However, it is not limited to this procedure. In other words, without obtaining the relative value of the causal influence level, it is possible to directly compare the size of the causal influence levels for each hierarchy, and assign a rank on the values of the causal influence level in descending order.

With the configuration above, processing load on the cause analyzer 233 may be reduced more.

In the cause analysis processing according to the embodiment as described above, it is configured such that a graph is displayed regarding the index of a higher level after a lapse of a certain time, as shown in the steps S010 to S011. However, it is not limited to this configuration. In other words, it is further possible that the cause analyzer 233 accepts from the user, a selection of an index to be displayed via the cause hierarchy display area 330, and generates and displays a graph regarding the accepted index in the causal index related information display area 340.

This configuration allows the user to refer to information regarding the index which the user wants.

It is to be noted that not only the total system of the cause analysis support system 1 is a transaction object, but also each unit and a program component for implementing an operation of each unit are considered as the transaction object.

**Claims**

1.  An apparatus for supporting cause analysis comprising,
    a storage unit for storing causal relation information which specifies a causal relation indicating relevance between cause and effect among multiple indexes and a relation level of the causal relation, business goal achievement level information which specifies a business goal achievement level, and causal influence level information for specifying an influence level among the indexes,
a communication unit for acquiring from a second apparatus via a network, graph configuration information relating to the indexes, and
a cause analyzer for calculating the influence level, by multiplying a second influence level of an effect side index of an influence-level calculation target index, a business goal not-achieved level obtained by subtracting the business goal achievement level from a business goal of the influence-level calculation target index, and a relation level between the effect side index of the influence-level calculation target index and the influence-level calculation target index, specifying as a causal index, an index which has the largest influence level, among indexes on the cause side of the causal relation, acquiring via the communication unit a graph relating to the causal index being specified, and generating screen information for displaying the graph.

2. The apparatus for supporting cause analysis according to claim 1, wherein,
the cause analyzer generates screen information for displaying the graph relating to the causal index, and subsequently generates screen information for displaying a second graph relating to an index belonging to the effect side of the causal index.

3. The apparatus for supporting cause analysis according to either of claim 1 and claim 2, wherein,
the cause analyzer further specifies the causal index, by comparing relative values of the influence levels among the indexes each having the causal relation being the same in depth, in a process for specifying the causal index.

4. The apparatus for supporting cause analysis according to any one of claim 1 to claim 3, wherein,
the goal achievement level is a value which is represented by a ratio of an actual value to a target value of the index.

5. The apparatus for supporting cause analysis according to claim 4, further comprising an input processor for accepting input information from a user, wherein,
the target value of the index is a value whose input is accepted by the input processor, and
the cause analyzer receives from the second apparatus, information regarding past target values and actual values and generates the screen information, in a process performed by the input processor for accepting the input of the target value.

6. A program for allowing a computer to execute a procedure for supporting cause analysis, further allowing the computer to function as a control means, and a storage means which stores, causal relation information which specifies a causal relation indicating relevance between cause and effect among multiple indexes and a relation level of the causal relation, business goal achievement level information which specifies a business goal achievement level, and causal influence level information for specifying an influence level among the indexes, and allowing the control means to execute,
a communication procedure which acquires from a second apparatus via a network, graph configuration information relating to the indexes,
a procedure which calculates the influence level by multiplying a second influence level of an effect side index of an influence-level calculation target index, a business goal not-achieved level obtained by subtracting the business goal achievement level from a business goal of the influence-level calculation target index, and a relation level between the effect side index of the influence-level calculation target index and the influence-level calculation target index,
a procedure which specifies as a causal index, an index which has the largest influence level, among indexes on the cause side of the causal relation, and
a procedure which acquires via the communication procedure, a graph relating to the causal index being specified, and generates screen information for displaying the graph.

7. The program according to claim 6, further allowing the control means to execute a procedure which generates screen information for displaying a graph relating to the causal index, and subsequently generates screen information for displaying a second graph relating an index belonging to the effect side of the causal index.

8. The program according to either of claim 6 and claim 7, further allowing the control means to specify the causal index, by comparing relative values of the influence levels among the indexes each having the causal relation being the same in depth, in a process for specifying the causal index.

9. The program according to any one of claim 6 to claim 8, wherein,

the goal achievement level is a value which is represented by a ratio of an actual value to a target value of the index.

10. The program according to claim 9, further allowing the control means to execute an input processing procedure for accepting input information from a user, wherein,
the target value of the index is a value whose input is accepted by the input processing procedure, and
the program allows the control means to receive from the second apparatus, information regarding past target values and actual values, and generate the screen information in a process performed by the input processing procedure for accepting the input of the target value.

11. A method for supporting cause analysis performed by an apparatus for supporting cause analysis, the apparatus for supporting cause analysis comprising a storage unit for storing causal relation information which specifies a causal relation indicating relevance between cause and effect among multiple indexes and a relation level of the causal relation, business goal achievement level information which specifies a business goal achievement level, and causal influence level information for specifying an influence level among the indexes, the method comprising,
a step for calculating the influence level by multiplying a second influence level of an effect side index of an influence-level calculation target index, a business goal not-achieved level obtained by subtracting the business goal achievement level from a business goal of the influence-level calculation target index, and a relation level between the effect side index of the influence-level calculation target index and the influence-level calculation target index,
a step for specifying as a causal index, an index which has the largest influence level, among indexes on the cause side of the causal relation,
a step of communication for acquiring from a second apparatus via a network, graph configuration information relating to the indexes, and
a step for acquiring via the step of communication, a graph relating to the causal index being specified, and for generating screen information for displaying the graph.

## FIG.1

# FIG.2

200

| | | | 213 |
| INPUT UNIT | ↔ | BUS | ↔ | ARITHMETIC UNIT |

211

213

INPUT UNIT ↔ ARITHMETIC UNIT

212

OUTPUT UNIT ↔

214

MAIN MEMORY UNIT

216

COMMUNICATION UNIT ↔

217

BUS

215

EXTERNAL STORAGE UNIT

# FIG.3A

| PARENT INDEX | CHILD INDEX | CHILD INDEX HIERARCHY | CAUSE AND FFECT RELATION LEVEL |
|---|---|---|---|
| SALES | PRODUCTION | 2 | 0.8 |
| SALES | DISTRIBUTION | 2 | 0.9 |
| PRODUCTION | PROCUREMENT | 3 | 0.9 |
| PRODUCTION | DEFECTIVE CONDITION | 3 | 0.7 |
| DISTRIBUTION | MARKETING | 3 | 0.6 |
| DISTRIBUTION | ALLOCATION | 3 | 0.9 |
| ... | ... | ... | ... |

2211  2212  2213  2214  221

# FIG.3B

# FIG.4

| INDEX | TARGET VALUE | ACTUAL VALUE | ACHIEVEMENT LEVEL (%) |
|---|---|---|---|
| SALES | 15000 | 12000 | 80 |
| PRODUCTION | 20000 | 16000 | 80 |
| DISTRIBUTION | 15000 | 14250 | 95 |
| PROCUREMENT | 500 | 300 | 60 |
| DEFECTIVE CONDITION | 2000 | 1980 | 99 |
| MARKETING | 100 | 78 | 78 |
| ALLOCATION | 12000 | 9600 | 80 |

FIG.5

223

| INDEX | RELATIVE HIERARCHY | INFLUENCE LEVEL | RELATIVE VALUE |
|---|---|---|---|
| PROCUREMENT | 2 | . 012 | 0. 70 |
| ALLOCATION | 2 | . 002 | 0. 10 |
| MARKETING | 2 | . 001 | 0. 07 |
| DEFECTIVE CONDITION | 2 | . 002 | 0. 14 |
| PRODUCTION | 1 | . 032 | 0. 78 |
| DISTRIBUTION | 1 | . 009 | 0. 22 |
| . . . | . . . | . . . | . . . |

2231  2232  2233  2234

# FIG.6

```
                    ┌────────────────────────────────┐
                    │   CAUSE ANALYSIS PROCESSING     │
                    └────────────────────────────────┘
                                   │
          ┌────────────────────────────────────────────┐
          │  ACCEPT INPUT OF CAUSE-ANALYSIS TARGET INDEX │──ᒥ─S001
          └────────────────────────────────────────────┘
                                   │
          ┌────────────────────────────────────────────┐
          │      SET UP CAUSAL RELATION TREE INFORMATION │──ᒥ─S002
          └────────────────────────────────────────────┘
                                   │
          ┌────────────────────────────────────────────┐
          │   ACCEPT MODIFICATION OF CAUSAL RELATION TREE│──ᒥ─S003
          └────────────────────────────────────────────┘
                                   │
          ┌────────────────────────────────────────────┐
          │  SET UP BUSINESS GOAL ACHIEVEMENT LEVEL TABLE│──ᒥ─S004
          └────────────────────────────────────────────┘
                                   │
          ┌────────────────────────────────────────────┐
          │       ACCEPT MODIFICATION OF BUSINESS        │──ᒥ─S005
          │      GOAL ACHIEVEMENT LEVEL TABLE            │
          └────────────────────────────────────────────┘
                                   │
          ┌────────────────────────────────────────────┐
          │        CALCULATE CAUSAL INFLUENCE LEVEL      │──ᒥ─S006
          └────────────────────────────────────────────┘
                                   │
          ┌────────────────────────────────────────────┐
          │     CALCULATE CAUSAL INFLUENCE RANK ORDER    │──ᒥ─S007
          └────────────────────────────────────────────┘
                                   │
          ┌────────────────────────────────────────────┐
          │   DISPLAY GRAPH OF CAUSE-ANALYSIS TARGET     │──ᒥ─S008
          │   INDEX FOR A PREDETERMINED PERIOD OF TIME   │
          └────────────────────────────────────────────┘
                                   │
          ┌────────────────────────────────────────────┐
          │        DISPLAY GRAPH OF INDEX HAVING         │──ᒥ─S009
          │      THE HIGHEST CAUSAL INFLUENCE RANK       │
          └────────────────────────────────────────────┘
                                   │
                                   ▼
          ⟨ GRAPH OF THE HIGHEST INDEX             ⟩──S010
          ⟨    IS BEING DISPLAYED?                 ⟩── Yes ──┐
                          │ No                               │
                          ▼                                  │
          ┌────────────────────────────────────────────┐    │
          │       DISPLAY GRAPH OF INDEX AT             │──ᒥ─S011
          │      HIGHER HIERARCHY FOR A                 │    │
          │   PREDETERMINED PERIOD OF TIME              │    │
          └────────────────────────────────────────────┘    │
                          │                                  │
                          └──────────────────────────┐       ▼
                                                      │   ┌───────┐
                                                      │   │  END  │
                                                          └───────┘
```

20

# FIG.7

CAUSE ANALYSIS SCREEN ~~ 300

INPUT OF INDEX: | SALES ▽ | ~~ 310

OUTPUT OF PROCESSING RESULT: ~~ 320

~~ 330

| CAUSE HIERARCHY 3 | CAUSE HIERARCHY 2 | CAUSE HIERARCHY 1 |
|---|---|---|
| INDEX NAME | INDEX NAME | INDEX NAME |
| PROCUREMENT ALLOCATION MARKETING DEFECTIVE CONDITION | PRODUCTION DISTRIBUTION | |

331 → 332 → 333

~~ 340

ACHIEVEMENT RATIO

100%

50%

0%   1W  2W  3W  4W  5W  6W  7W

3411

3412

# FIG.8

RELATION LEVEL INPUT SUPPORT SCREEN 　　　　400

INDEX NAME
(CHILD)

INDEX NAME
(PARENT)

INPUT OF
RELATION
LEVEL:

PRODUCTION

DISTRIBUTION

PROCUREMENT

DEFECTIVE
　CONDITION

MARKETING

ALLOCATION

PRODUCTION

410

420

430

REGISTER 　　440

## FIG.9A

TARGET VALUE INPUT SCREEN ~500

INDEX NAME | TARGET TYPE | INPUT OF TARGETVALUE:

SALES | SALES BUDGET | 1520 ~530
PRODUCTION | SALES
PROCUREMENT | PERFORMANCE
DEFECTIVE | ~520
CONDITION | REFERENCE INFORMATION ~540
MARKETING | REGISTER ~550
ALLOCATION

510 ~

## FIG.9B

REFERENCE INFORMATION DISPLAY SCREEN ~560

571 572

| REFERENCE INFORMATION | SALES BUDGET | SALES PERFORMANCE |
|---|---|---|
| LAST YEAR | 2000 | 2100 |
| THE YEAR BEFORE LAST | 1800 | 1740 |

570 ~

# FIG.10A

# FIG.10B

FIG.11

# FIG.12

721
PROCUREMENT . 012

711
PRODUCTION . 032

722
DEFECTIVE
CONDITION . 002

701
SALES

723
MARKETING . 001

712
DISTRIBUTION . 009

724
ALLOCATION . 002

## FIG.13

# FIG.14

# FIG.15

# FIG.16

RELATION LEVEL INPUT SUPPORT SCREEN ⟿ 400

INDEX NAME (CHILD)

INDEX NAME (PARENT)

INPUT OF RELATION LEVEL:

⟿ 430

PRODUCTION
DISTRIBUTION
PROCUREMENT
DEFECTIVE
  CONDITION
MARKETING
ALLOCATION

410 ⟿

PRODUCTION

⟿ 420

REGISTER ⟿ 440

REFERENCE ⟿ 450
INFORMATION

452

SYNCHRONOUS
TENDENCY

ACHIEVEMENT
RATIO

CORRELATION ⟿ 453

451 ⟿

454 ⟿

## FIG.17A

PRODUCTION VOLUME

PRODUCTION

PROCUREMENT

461

PROCUREMENT VOLUME

460

462

TIME

## FIG.17B

ACHIEVEMENT RATIO

PRODUCTION

PROCUREMENT

471

470

472

TIME

## FIG.17C

481

482

480

| PERIOD | CORRELATION FACTOR |
|---|---|
| MOST RECENT 1W | 0.7 |
| MOST RECENT ONE MONTH | 0.7 |
| MOST RECENT TWO MONTHS | 0.5 |
| MOST RECENT HALF YEAR | 0.4 |
| MOST RECENT ONE YEAR | 0.3 |
| SAME MONTH A YEAR AGO | 0.8 |
| .... | |

Europäisches
Patentamt

European
Patent Office

Office européen
des brevets

# EUROPEAN SEARCH REPORT

Application Number

EP 10 16 0756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUTAKA KUDO, SAURABH (MANU) BATRA: "Hitachi IT Operations Analyzer - Root Cause Analysis for Supporting Fault Identification" HITACHI DATA SYSTEMS, May 2009 (2009-05), pages 1-10, XP002595782 * the whole document * ----- | 1-11 | INV. G06Q50/00 |

TECHNICAL FIELDS
SEARCHED       (IPC)

G06Q

The present search report has been drawn up for all claims

| Place of search | Date of completion of the search | Examiner |
|---|---|---|
| Munich | 9 August 2010 | Ramenzoni, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................................
& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003345865 A